# NEUE EUROPÄISCHE PATENTSCHRIFT

(11) **EP 0 298 906 B2**
(45) Veröffentlichungstag und Bekanntmachung des Hinweises auf die Entscheidung über den Einspruch: **08.05.1996**
(45) Hinweis auf die Patenterteilung: 29.05.1991
(21) Anmeldenummer: 88730147.1
(22) Anmeldetag: 01.07.1988
(51) Int. Cl.: B60C 27/20

(54) **Gleitschutzvorrichtung für Fahrzeugräder**
Antiskid device for vehicle wheels
Dispositif antidérapant pour roues de véhicules

(30) Priorität: 08.07.1987 DE 3722902
(43) Veröffentlichungstag der Anmeldung: 11.01.1989
(73) Patentinhaber: RUD-Kettenfabrik Rieger & Dietz GmbH u. Co., D-73406 Aalen (DE)
(72) Erfinder: Zeiser, Peter, Dipl.-Ing., D-7080 Aalen-Wasseralfingen (DE); Kaiser, Helmut, Dipl.-Ing.(FH), D-7080 Aalen-Hofherrnweiler (DE); Rieger, Hansjörg Werner, Dr.-Ing., D-7080 Aalen (DE)
(74) Vertreter: Böning, Manfred, Dr.-Ing.

(56) Entgegenhaltungen:
- DE-A- 3 142 489
- DE-A- 3 545 529
- DE-U- 8 131 305
- DE-U- 8 502 229
- DE-U- 8 503 359
- FR-A- 1 415 962

## Beschreibung

Die Erfindung betrifft eine Gleitschutzvorrichtung nach dem Oberbegriff des Anspruches 1.

Eine Gleitschutzvorrichtung der vorstehenden Art ist aus der DE-U-85 03 359 bekannt. Bei der bekannten Vorrichtung bilden gleichmäßig über den Umfang einer am Fahrzeugrad befestigbaren Tragscheibe verteilte Vorsprünge Halteelemente für jeweils einen Greifelementträger. Die auf der Lauffläche des Reifens des Rades zu liegen kommenden verjüngten Enden der Greifelementträger dieser Vorrichtung ragen in den lichten Innenraum jeweils eines Vertikalgliedes eines über den größten Teil des Reifenumfanges verlaufenden Längskettenstranges, an dem zwischen jeweils zwei aufeinanderfolgenden Greifelementträgern die einen Enden jeweils zweier Querkettenstrangabschnitte angreifen, deren jeweils andere Enden außerhalb der Reifenlauffläche mit den Greifelementträgern verbunden sind. Aufgrund der gewählten Laufnetzkonfiguration der bekannten Gleitschutzvorrichtung läßt deren Abrollverhalten und der hieraus resultierende Fahrkomfort eines mit ihr ausgerüsteten Fahrzeuges ungeachtet der Verwendung eines sich über den größten Teil des Reifenumfanges erstreckenden Längskettenstranges zu wünschen übrig. Die die Reifenschultern passierenden Querkettenstränge und der Abstand, den diese im Reifenschulterbereich voneinander einnehmen, führen nämlich zu einem Abrollverhalten, das weitgehend dem bekanntermaßen unbefriedigenden Abrollverhalten von Leiterketten entspricht. Als verbesserungsbedürftig erweist sich bei der bekannten Gleitschutzvorrichtung zudem der Umstand, daß in den in Reifenumfangsrichtung verlaufenden Längskettenstrang durch die Querkettenstrangabschnitte unter Last Querkräfte eingeleitet werden, die ungünstige Belastungen der nichtmetallischen und folglich begrenzt widerstandsfähigen Greifelementträger mit sich bringen. Um ein Abheben der dem Längskettenstrang abgewandten Bereiche der Greifelementträger von der Lauffläche des Reifens zu verhindern, müssen bei der bekannten Konstruktion sämtliche Greifelementträger gelenkig oder auch fest mit jeweils einem Halteelement verbunden sein.

Bekannt ist außerdem und zwar aus der DE-U-81 31 305 eine Gleitschutzvorrichtung, die auf die Lauffläche des Reifens greifende Drahtbügel aufweist, deren Joche schwenkbar an den äußeren Enden von vier Halteelemente für die Bügel formenden Armen gelagert sind. Mit den Schenkeln der Bügel sind Kettenstrangabschnitte verbunden, die im montierten Zustand der Vorrichtung beidseits der Laufflächenmitte nebeneinander zu liegen kommen, wobei zur Sicherung eines Abstandes der Kettenstrangabschnitte voneinander u. a. metallische Querstäbe verwendet werden. Diese Gleitschutzvorrichtung läßt ebenfalls Komfortwünsche offen und dies vornehmlich dann, wenn trockene Fahrbahnabschnitte passiert werden müssen, da in derartigen Fällen einerseits der Laufruhe Grenzen gesetzt und andererseits insbesondere die Biege- und Verschleißbeanspruchungen der auf die Lauffläche greifenden Drahtbügel nicht unerheblich sind. Nicht zu befriedigen vermag bei dieser zweiten bekannten Konstruktion außerdem der Umstand, daß die Enden der Kettenstrangabschnitte im Bereich von Ringgliedern mehr oder weniger V-förmig aufeinander zulaufen. Hierdurch entstehen vergleichsweise schmale Laufnetzabschnitte, die dem Laufnetz eine gewisse Labilität vermitteln, welche ein unkontrolliertes Abheben des einen oder anderen Endes der Querstäbe von der Reifenlauffläche fördert.

Der Erfindung liegt die Aufgabe zugrunde, eine Gleitschutzvorrichtung der zuerst beschriebenen Art zu schaffen, die sich durch ein hohes Maß an Laufruhe auch auf trockener Fahrbahn, durch gute Seitenführungseigenschaften und durch eine besonders einfache und geschickte Verbindung des unterschiedlichen Fahrbahnbeschaffenheiten Rechnung tragenden Laufnetzes mit den jeweiligen Halteelementen auszeichnet. Diese Aufgabe wird erfindungsgemäß durch die Merkmale des Patentanspruchs 1 gelöst.

Die erfindungsgemäße Gleitschutzvorrichtung bietet den Vorteil einer hohen Laufleistung. Bei ihr erfüllen die aus Gummi oder Kunststoff bestehender Greifelementträger mehrere Funktionen gleichzeitig. Sie bilden zunächst Abstandshalter für die überall nebeneinander verlaufenden und Spurführungsringe bildenden Kettenstrangabschnitte. Außerdem stellen sie Dämpfungselemente dar, die der Geräuschentwicklung auf trockenen Fahrbahnabschnitten entgegenwirken und hier zudem die Haftreibungsbedingungen zwischen Fahrzeugrad und Fahrbahn verbessern. Schließlich lassen sie sich als Träger von Spikes nutzen, um die Gleitschutzeigenschaften auf vereisten Fahrbahnabschnitten positiv zu beeinflussen. Die Kettenstrangabschnitte ihrerseits verhindern, daß die Enden der Greifelementträger sich spatenartig in die verschneite Fahrbahn einzugraben suchen und dadurch vorzeitig zerstört werden.

Als besonders vorteilhaft erweist es sich, wenn die Greifelementträger aus zwei in Umfangsrichtung des Fahrzeugrades orientieren, zumindest den Hauptteil der Greifelemente bildenden Längsstücken und einstückig mit diesen ausgebildeten X-förmigen Abstandshaltern bestehen, wobei die Längsstücke mit den Kettenstrangabschnitten fluchten sollten, um in jeweils einer Ebene liegende Spurringe aus verschiedenen, unterschiedlichen Fahrbahnbedingungen Rechnung tragenden Materialien zu bilden.

Um einen homogenen Aufbau der Gleitschutzvorrichtung zu gewährleisten, sollten die die Greifelementträger miteinander verbindenden Kettenstrangabschnitte aus mindestens drei und höchstens sieben Kettengliedern bestehen. Man erreicht auf diese Weise bei Verwendung von Kettenstrangabschnitten aus Gliedern üblicher Teilung, daß insgesamt annähernd gleiche Teile des Radumfangs abwechselnd von Kettengliedern und Greifelementträgern bedeckt sind.

Die Greifelementträger und die sie miteinander verbindenden Kettenstrangabschnitte bilden einen geschlossenen, sich eng an die Lauffläche des Fahrzeugrades anlegenden Ring, dessen Umfang zum Ausgleich des Reifenverschleißes auch von ungeschulten Fahrzeugführern bequem verkürzbar sein sollte. Dieser Forderung läßt sich dadurch Rechnung tragen, daß die Greifelementträger mit Anschlußorganen versehen werden, die vorzugsweise aus formschlüssig in den Greifelementträgern verankerten Haken bestehen, in die parallel zur Lauffläche des Fahrzeugrades orientierte Glieder der Kettenstrangabschnitte einhängbar sind, welche sich in der eingehängten Position durch Verriegelungsnasen oder vorzugsweise mehrgängige Steilgewindeschrauben sichern lassen.

Zur Flexibilität der Greifelementträger trägt es bei, wenn deren Längsstücke Einschnürungen aufweisen und ihre Abstandshalter zumindest im zentralen Bereich frei von Greifelementen und folglich vergleichsweise flach ausgebildet sind.

Die Erfindung wird im folgenden anhand der beigefügten, bevorzugte Lösungen darstellenden Zeichnung näher erläutert. Es zeigen:
Fig. 1 die perspektivische Ansicht einer auf ein Fahrzeugrad aufgezogenen Gleitschutzvorrichtung,
Fig. 2 eine zur Montage vorbereitete Gleitschutzvorrichtung,
Fig. 3 die Gleitschutzvorrichtung gemäß Fig. 2 im zusammengelegten Zustand,
Fig. 4 einen Greifelementträger der Gleitschutzvorrichtungen gemäß Fig. 1 bis 3 in vergrößertem Maßstab,
Fig. 5 ebenfalls in vergrößertem Maßstab die Draufsicht auf einen weiteren Greifelementträger der Gleitschutzvorrichtungen gemäß Fig. 1 bis 3,
Fig. 6 einen Schnitt längs der Linie VI-VI in Fig. 5,
Fig. 7 eine Ansicht in Richtung der Pfeile VII-VII in Fig. 5,
Fig. 8 eine der Fig. 5 entsprechende Draufsicht auf einen modifizierten Greifelementträger, der eine bequeme gliedweise Verkürzung von Kettenstrangabschnitten zuläßt,
Fig. 9 einen Schnitt längs der Linie IX-IX in Fig. 8,
Fig. 10 einen Schnitt längs der Linie X-X in Fig. 8,
Fig. 11 einen der Fig. 10 entsprechenden Schnitt durch ein modifiziertes Ausführungsbeispiel,
Fig. 12 die Draufsicht auf einen Greifelementträger einer Gleitschutzvorrichtung mit durchgehenden Kettensträngen und
Fig. 13 einen Teilschnitt längs der Linie XIII-XIII in Fig. 12.

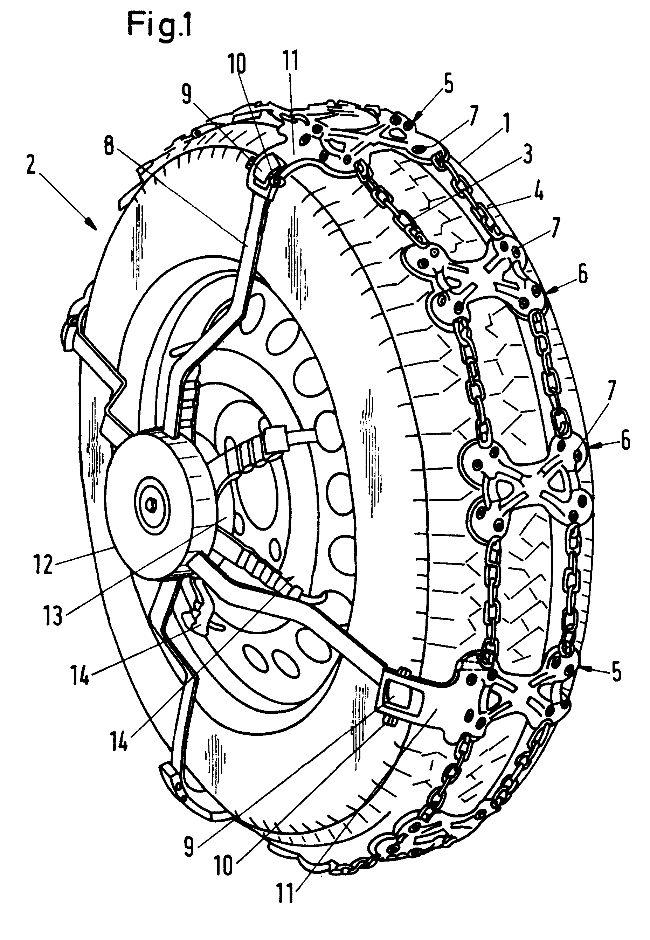

In Fig. 1 ist 1 die Lauffläche eines Fahrzeugrades 2, auf das eine zusammenlegbare Gleitschutzvorrichtung aufgezogen ist. Die Gleitschutzvorrichtung besteht aus paarweise nebeneinander angeordneten Kettenstrangabschnitten 3 und 4, welche zur Erzielung guter Spurführungseigenschaften im Bereich der Schultern des auf das Fahrzeugrad 2 aufgezogenen Reifens parallel zueinander verlaufen. Zwischen den Kettenstrangabschnitten 3 bzw. 4 sind Greifelementträger 5,6 angeordnet, die von stollenartigen Vorsprüngen gebildete Greifelemente aufweisen und im Bereich ihrer Greifelemente mit Spikes 7 bestückt sind. Zur Halterung des aus den Greifelementträgern 5,6 und den Kettenstrangabschnitten 3 und 4 bestehenden Laufnetzes dienen Haltearme 8, die das Laufnetz federnd in den Bereich der Lauffläche des Fahrzeugrades 2 drücken. Die äußeren Enden 9 der Haltearme 8 sind unmittelbar, d.h. ohne zusätzliche Zwischenelemente mittels Bolzen 10 schwenkbar mit Auslegern 11 der Greifelementträger 5 verbunden, während ihre inneren Enden von einem Tragkörper 12 gehalten werden, der seinerseits gegenüber einem Lagerteil 13 drehbar gelagert ist, das über mehrere federnde Verbindungselemente 14 am Fahrzeugrad 2 befestigt ist, die auf die Haltearme 8 und die Greifelementträger 5 eine in Richtung der Radachse wirkende Axialkraft ausüben.

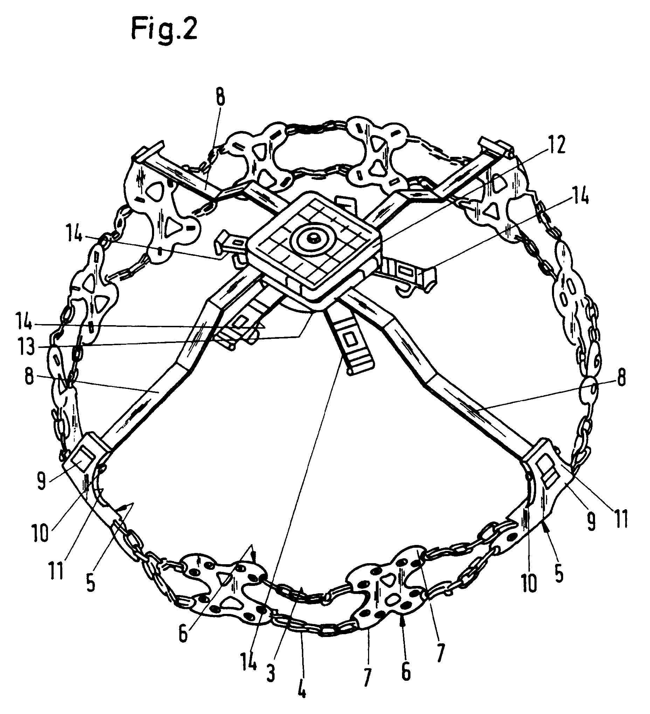

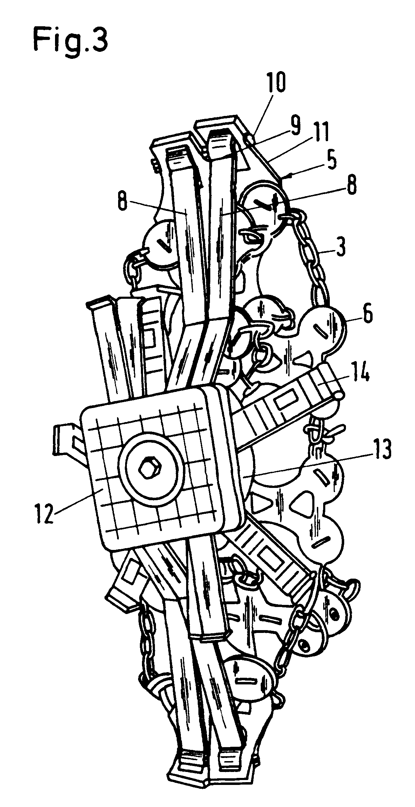

Die Fig. 2 zeigt eine zur Montage vorbereitete Gleitschutzvorrichtung, während in Fig. 3 die Gleitschutzvorrichtung gemäß Fig. 2 in zusammengelegtem Zustand dargestellt ist. Gleitschutzvorrichtungen der beschriebenen Art bieten den Vorteil einer besonders einfachen Montage, da sich ihre bei der Montage zunächst neben der Radaufstandsfläche zu liegen kommenden Gleitschutzelemente nach dem Befestigen des Lagerteiles 13 am Fahrzeugrad 2 automatisch in die Betriebslage bewegen, sobald das Fahrzeugrad 2 in Drehung versetzt wird. Sie lassen sich bei entsprechender Ausbildung _ wie die Fig. 3 deutlich macht- trotz der Verwendung vergleichsweise breiter und sperriger Greifelementträger 5,6 als Abstandshalter für die Kettenstrangabschnitte 3,4 gut zusammenlegen und beanspruchen folglich vergleichsweise wenig Stauraum.

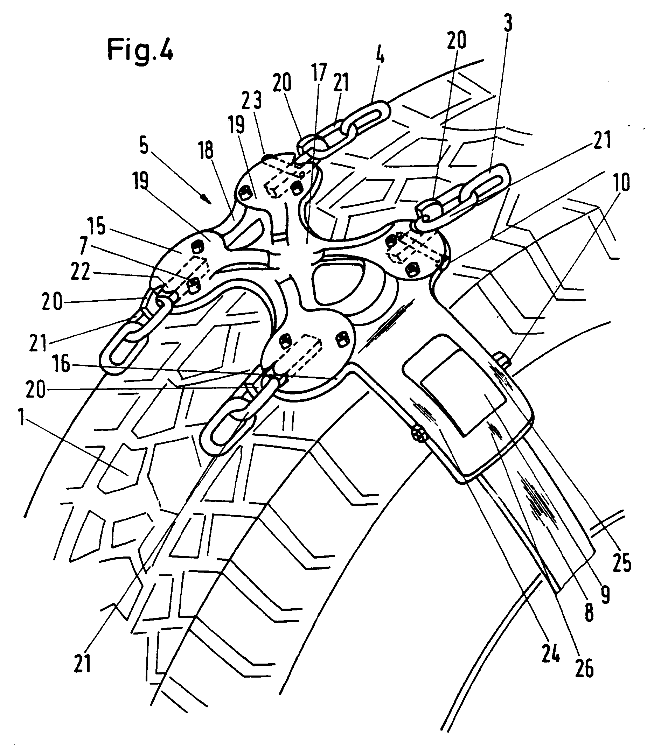

Einzelheiten eines mit einem Ausleger 11 versehenen Greifelementträgers 5 zeigt die Fig. 4. Man erkennt, daß der Greifelementträger 5 aus zwei Längsstücken 15, 16 und einem X-förmigen Abstandshalter 17 besteht. Der Abstandshalter 17 ist zumindest in seinem zentralen Bereich vergleichsweise flach ausgebildet, die flache Ausbildung und Einschnürungen 18 der Längsstücke 15,16 fördern die Flexibilität des Greifelementträgers 5, dessen Greifelemente 19 von reliefartigen Vorsprüngen gebildet werden.

In den Greifelementträger 5 sind formschlüssig von senkrecht zu seiner Grundfläche orientierten Haken gebildete Anschlußorgane 20 eingebettet, in welche parallel zur Lauffläche 1 orientierte, d.h. horizontale Glieder 21 der Kettenstrangabschnitte 3,4 einhängbar sind. Zur Sicherung der Glieder 21 in ihrer eingehängten Position dienen Verriegelungsnasen 22 und Schrauben 23, wobei die mehrgängig ausgebildeten, mit einem das Sichern des jeweils eingehängten Kettengliedes erleichternden Steilgewinde versehenen Schrauben 23 ein bequemes Verkürzen der Kettenstrangabschnitte 3,4 ermöglichen, während die Verriegelungsnasen 22 ohne Hilfsmittel nicht überwindbar sein sollten. Da die Verkürzbarkeit des Laufnetzes zwecks Anpassung der Gleitschutzvorrichtung an den Umfang des Fahrzeugrades 2 für die einwandfreie Funktion der Gleitschutzvorrichtung sehr wichtig ist, kommt der schnellen und einfachen Verkürzbarkeit besondere Bedeutung zu.

Das äußere Ende des Auslegers 11 ist als Anschlußgabel mit Zinken 24,25 ausgebildet, die an ihren den Haltearmen 8 zugewandten Enden durch eine Stützbrücke 26 miteinander verbunden sind, die die Schwenkbarkeit des Greifelementträgers 5 gegenüber dem ihm zugeordneten Haltearm 8 begrenzen und deren Umklappen in eine die Montage der Gleitschutzvorrichtung unmöglich machende Position verhindern.

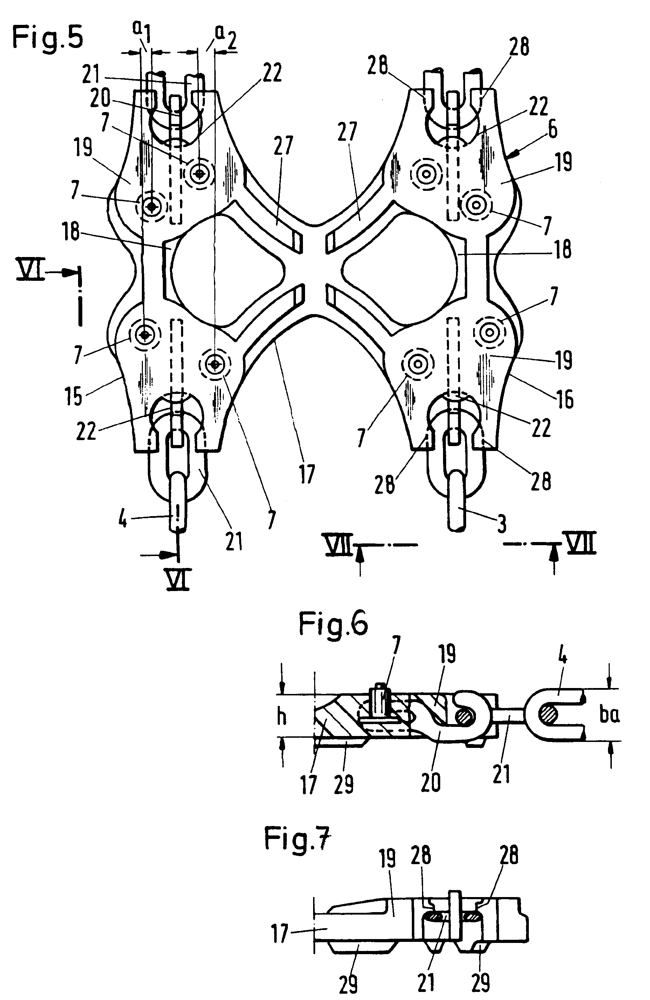

Einzelheiten des Aufbaus der Greifelementträger 6 zeigen die Fig. 5 bis 7.

Auch der Greifelementträger 6 besteht aus zwei Längsstücken 15 und 16, die durch einen X-förmigen Abstandshalter 17 miteinander verbunden sind und in ihrem mittleren Bereich Einschnürungen 18 aufweisen. Die von stollenartigen Vorsprüngen gebildeten Greifelemente 19 erstrecken sich über die gesamten Längsstücke 15,16 und bei 27 in den Bereich der Abstandshalter 17. Durch die X-förmige Ausbildung der in ihrer Mitte vorsprungfreien Abstandshalter 17 und durch die Einschnürungen 18 wird wiederum ein hohes Maß an Flexibilität erreicht und so die Voraussetzung dafür geschaffen, daß die Greifelementträger 6 über ihren ganzen Bereich eng am Reifen anliegen. Dieses enge Anliegen kommt nicht nur der Standzeit der Greifelementträger 6 zugute, sondern es fördert auch die Laufruhe eines mit der Gleitschutzvorrichtung bestückten Fahrzeuges. An den Enden der Längsstücke 15 und 16 sind auch hier formschlüssig in die Greifelementträger 6 von Haken gebildete Anschlußorgane 20 für jeweils ein parallel zur Lauffläche orientiertes Glied 21 der Kettenstrangabschnitte 3 bzw. 4 eingebettet. Elastische Verriegelungsnasen 22 verhindern ein Aushaken der Glieder 21 aus den Anschlußorganen 20, während Sperrnasen 28 ein Hoch- und Querschwenken der Glieder 21 unterbinden.

Die Längsstücke 15 und 16 sind in allen Fällen im wesentlichen fluchtend zu den Kettenstrangabschnitten 3 und 4 angeordnet. Sie bilden mit diesen Spurringe, die einem seitlichen Ausweichen des Fahrzeuges entgegenwirken. Um die Spurhaltung auf dem gesamten Umfang des Fahrzeugrades 2 sicherzustellen und eine hohe Laufruhe zu verwirklichen, ist die Höhe h der Greifelementträger 5,6 im Bereich ihrer Greifelemente 19 im wesentlichen gleich der äußeren Breite bₐ der Glieder der Kettenstrangabschnitte 3 bzw. 4, wobei an der Unterseite der Greifelementträger 5,6 angeordnete Mitnehmer 29, die die Traktionskräfte von der Gleitschutzvorrichtung auf das Fahrzeugrad 2 übertragen und einem Durchrutschen des Laufnetzes gegenüber der Lauffläche entgegenwirken, ohne dessen Wanderungsbewegung zu verhindern, außer Betracht bleiben.

Durch die Formgebung der Greifelemente 19 wird beim Einsatz der Gleitschutzvorrichtung im Schnee ein ausreichender Vortrieb gewährleistet. Auf vereister Fahrbahn dagegen kommt den Spikes 7 die dominierende Bedeutung bezüglich der zu erzielenden Gleitschutzwirkung zu. Um einen optimalen Gleitschutzeffekt zu erzielen, sind an den Ecken der Greifelementträger 5,6 jeweils zwei Spikes 7 angeordnet, wobei der Abstand jeweils zweier in Laufrichtung aufeinanderfolgender Spikes 7 eines Greifelementträgers an der Trägeraußenseite kleiner ist als an der Trägerinnenseite. Als günstig erweist es sich darüber hinaus, daß die Spikes 7 eines Greifelementträgers 5 bzw. 6 in Radumfangsrichtung betrachtet um Beträge a₁ bzw. a₂ quer zueinander versetzt sind.

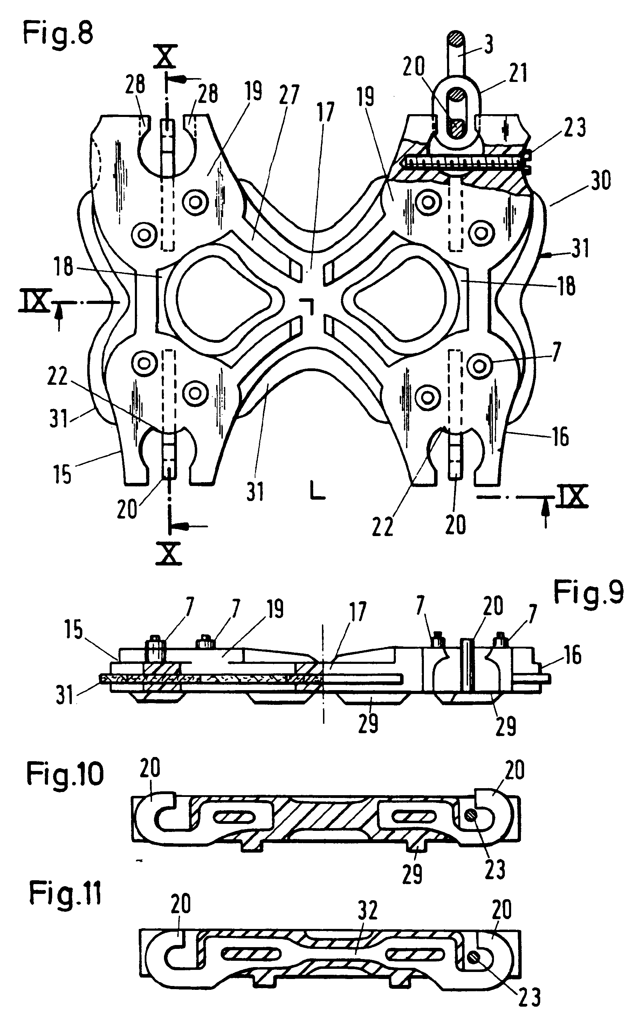

Ein modifiziert Greifelementträger 30 ist in den Fig. 8 bis 10 dargestellt. Teile, die Teilen des Greifelementträgers 6 gemäß Fig. 5 bis 7 entsprechen, sind durch die gleichen Bezugszeichen gekennzeichnet, so daß es genügt, wenn hier nur die Unterschiede zwischen den beiden Konstruktionen beschrieben werden. Anders als der Greifelementträger 6 ist der Greifelementträger 30 mit einer zur Erhöhung seiner Festigkeit dienenden Verstärkungseinlage 31 versehen. Außerdem sind am einen Ende der Längsstücke 15 und 16 an die Stelle von Verriegelungsnasen 22 wiederum Schrauben 23 getreten.

Sowohl bei den Greifelementträgern 5,6 als auch beim Greifelementträger 30 erfolgt die Verbindung zweier Anschlußorgane 20 eines Längsstückes 15 bzw. 16 durch das Grundmaterial der Greifelementträger und/oder durch die Verstärkungseinlage 31. Stattdessen ist es auch möglich, die Anschlußorgane 20, wie dies in Fig. 11 angedeutet ist, durch ein Kupplungselement 32, welches einstückig mit den Anschlußorganen oder lösbar oder unlösbar mit diesen verbunden sein kann, miteinander zu koppeln. Das Kupplungselement 32 bildet in jedem Fall eine die Zugkräfte übertragende Brücke zwischen den jeweils fluchtend zueinander angeordneten Anschlußorganen.

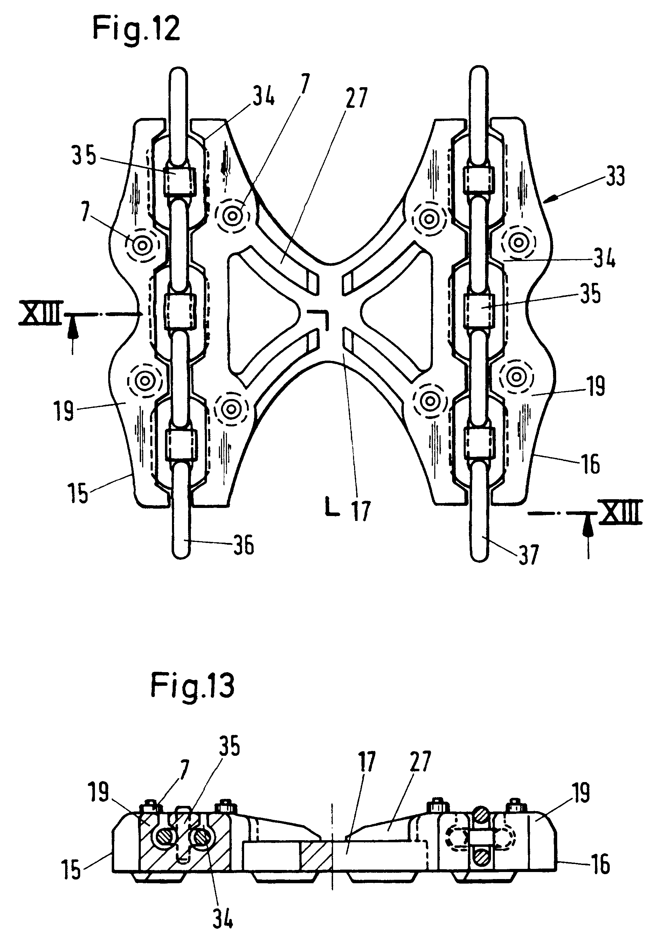

Ein weiterer modifizierter Greifelementträger 33 ist in den Fig. 12 und 13 dargestellt. Er ist im Bereich seiner Längsstücke 15 und 16 mit Aufnahmen 34 und Verankerungsorganen 35 für einhängbare Glieder durchgehender Kettenstränge 36,37 ausgestattet.

Bei allen beschriebenen Konstruktionen sollte die Zahl der zwischen aufeinanderfolgenden Greifelementträgern angeordneten Glieder von Kettenstrangabschnitten nicht weniger als drei und nicht mehr als sieben betragen.

## Patentansprüche

1. Gleitschutzvorrichtung für Fahrzeugräder mit einer am Fahrzeugrad (2) befestigbaren und im montierten Zustand gegenüber diesem drehbaren Halterung (12) für mindestens ein im montierten Zustand der Gleitschutzvorrichtung an der Radaußenseite angeordnetes Halteelement (8) für Greifelementträger (5) aus biegsamem Gummi oder Kunststoff, die durch Kettenstrangabschnitte miteinander verbunden und mit in den Bereich der Reifenflanke ragenden Auslegern (11) versehen sind, deren Enden um eine parallel zur Reifenflanke verlaufende Achse schwenkbar am Halteelement (8) gelagert sind, **dadurch gekennzeichnet**, daß die Kettenstrangabschnitte (3,4) nebeneinander und im zumindest annähernd konstanten Abstand voneinander beidseits der Laufflächenmitte in Reifenumfangsrichtung auf der Reifenlauffläche verlaufen, daß jeweils beide Enden eines jeden Kettenstrangabschnittes (3,4) mit Greifelementträgern (5) verbunden sind und daß die Greifelementträger (5) die Querlage der Kettenstrangabschnitte (3,4) zueinander sichernde Distanzstücke bilden und zusammen mit den Kettenstrangabschnitten (3,4) durchgehende Spurringe formen.

2. Gleitschutzvorrichtung nach Anspruch 1, **dadurch gekennzeichnet**, daß zwischen jeweils in Radumfangsrichtung aufeinanderfolgenden Greifelementträgern (5) mit in den Bereich der Reifenflanke ragenden Auslegern (11) weitere als Distanzstükke für die Kettenstrangabschnitte (3,4) ausgebildete Greifelementträger (6,30,33) aus einem biegsamen Material, insbesondere Gummi oder Kunststoff, angeordnet sind, die keine Ausleger aufweisen.

3. Gleitschutzvorrichtung nach Anspruch 1, oder 2 dadurch gekennzeichnet, daß die Ausleger (11) mit Anschlußgabeln für mehrere Halteelemente bildende Haltearme (8) versehen sind.

4. Gleitschutzvorrichtung nach Anspruch 3, dadurch gekennzeichnet, daß die Zinken (24, 25) der Anschlußgabeln an ihren den Greifelementen (19) der Greifelementtträger (5) abgewandten Enden durch Stützbrücken (26) miteinander verbunden sind, die die Schwenkbarkeit der Greifelementträger (5) gegenüber den Haltearmen (8) begrenzende, gegen die Außenseite der Haltearme (8) zur Anlage kommende Anschläge bilden.

5. Gleitschutzvorrichtung nach einem der Ansprüche 1 bis 4, dadurch gekennzeichnet, daß die Ausleger (11) und die Greifelementträger (5) einstückig ausgebildet sind.

6. Gleitschutzvorrichtung nach einem der Ansprüche 1 bis 5, dadurch gekennzeichnet, daß die Greifelementträger (5, 6, 30, 33) mit Anschlußorganen (20) für Glieder (21) der Kettenstrangabschnitte (3, 4) versehen sind.

7. Gleitschutzvorrichtung nach Anspruch 6, dadurch gekennzeichnet, daß die Anschlußorgane (20) eines Greifelementträgers für jeweils zwei in Radumfangsrichtung aufeinanderfolgende Kettenstrangabschnitte (3, 4) über Kupplungselemente (32) miteinander verbunden sind.

8. Gleitschutzvorrichtung nach Anspruch 6 oder 7, dadurch gekennzeichnet, daß die Anschlußorgane (20) von formschlüssig in den Greifelementträgern (5, 6, 30, 33) verankerten Haken gebildet werden, in die Glieder (21) der Kettenstrangabschnitte (3, 4) einhängbar sind.

9. Gleitschutzvorrichtung nach Anspruch 8, dadurch gekennzeichnet, daß mindestens ein Teil der Greifelementträger (5, 6, 30, 33) elastische Verriegelungsnasen (22) für die in die Haken eingehängten Glieder (21) der Kettenstrangabschnitte (3, 4) bilden.

10. Gleitschutzvorrichtung nach Anspruch 8 oder 9, dadurch gekennzeichnet, daß die mit den Anschlußorganen (20) verbundenen Glieder (21) der Kettenstrangabschnitte (3, 4) parallel zur Lauffläche (1) des Fahrzeugrades (2) orientiert sind.

11. Gleitschutzvorrichtung nach einem der Ansprüche 8 bis 9, dadurch gekennzeichnet, daß die in die Haken eingehängten Glieder (21) der Kettenstrangabschnitte (3, 4) Horizontalglieder (21) bilden, deren Längsschenkel durch Sperrnasen (28) gegen Hoch- und Querschwenken gesichert sind.

12. Gleitschutzvorrichtung nach einem der Ansprüche 6 bis 11, dadurch gekennzeichnet, daß mindestens einige der mit den Anschlußorganen (20) verbundenen Glieder (21) der Kettenstrangabschnitte (3, 4) durch jeweils eine Schraube (23) in der eingehängten Position gesichert sind.

13. Gleitschutzvorrichtung nach Anspruch 12, dadurch gekennzeichnet, daß die Schraube (23) mehrgängig ist.

14. Gleitschutzvorrichtung nach Anspruch 12 oder 13, dadurch gekennzeichnet, daß die Schraube (23) ein Steilgewinde hat.

15. Gleitschutzvorrichtung nach einem der Ansprüche 1 bis 5, dadurch gekennzeichnet, daß mindestens einige Kettenstrangabschnitte (3, 4) von Abschnitten durchgehender Kettenstränge (36, 37) gebildet werden, die in Aufnahmen (34) der Greifelementträger (33) gehalten werden.

16. Gleitschutzvorrichtung nach einem der Ansprüche 1 bis 15, dadurch gekennzeichnet, daß die Greifelementträger (5, 6, 30, 33) mit Spikes (7) bestückt sind.

17. Gleitschutzvorrichtung nach Anspruch 16, dadurch gekennzeichnet, daß jeweils mindestens zwei Spikes (7) im Bereich einer jeden Ecke eines Greifelementträgers (5, 6, 30, 33) angeordnet sind.

18. Gleitschutzvorrichtung nach Anspruch 16 oder 16, dadurch gekennzeichnet, daß der Abstand jeweils zweier in Laufrichtung aufeinanderfolgender Spikes (7) eines Greifelelementträgers (5, 6, 30, 33) an der Trägeraußenseite kleiner als an der Trägerinnenseite oder umgekehrt ist.

19. Gleitschutzvorrichtung nach einem der Ansprüche 16 bis 18, dadurch gekennzeichnet, daß die Spikes (7) eines Greifelementträgers (5, 6, 30, 33) in Radumfangsrichtung betrachtet quer zueinander versetzt sind.

20. Gleitschutzvorrichtung nach einem der Ansprüche 1 bis 19, dadurch gekennzeichnet, daß die äußere Breite (bₐ) der Glieder der Kettenstrangabschnitte (3, 4) im wesentlichen gleich der Höhe (h) der Greifelementträger (5, 6, 30, 33) im Bereich der Greifelemente (19) ist.

21. Gleitschutzvorrichtung nach einem der Ansprüche 1 bis 20, dadurch gekennzeichnet, daß die Greifelementträger (5, 6, 30, 33) aus zwei in Radumfangsrichtung angeordneten, zumindest den größten Teil der Greifelemente (19) bildenden Längsstücken (15, 16) und einem diese miteinander verbindenden Abstandshalter (17) bestehen.

22. Gleitschutzvorrichtung nach Anspruch 21, dadurch gekennzeichnet, daß die Längsstücke (15, 16) Einschnürungen (18) aufweisen.

23. Gleitschutzvorrichtung nach Anspruch 21 oder 21, dadurch gekennzeichnet, daß die Längsstücke (15, 16) und die Abstandshalter (17) einstückig ausgebildet sind.

24. Gleitschutzvorrichtung nach einem der Ansprüche 21 - 23 dadurch gekennzeichnet, daß die Abstandshalter (17) X-förmig ausgebildet sind.

25. Gleitschutzvorrichtung nach einem der Ansprüche 21 bis 24, dadurch gekennzeichnet, daß die Längsstücke (15, 16) im wesentlichen fluchtend zu den Kettenstrangabschnitten (3, 4) angeordnet sind.

26. Gleitschutzvorrichtung nach einem der Ansprüche 1 bis 25, dadurch gekennzeichnet, daß die Kettenstrangabschnitte (3, 4) und die Greifelementträger (5, 6, 30, 33) einen geschlossenen Ring veränderbaren Umfanges bilden.

27. Gleitschutzvorrichtung nach einem der Ansprüche 1 bis 26, dadurch gekennzeichnet, daß die die Greifelementträger (5, 6, 30, 33) untereinander verbindenden Kettenstrangabschnitte (3, 4) aus mindestens drei und höchstend sieben Kettengliedern bestehen.

28. Gleitschutzvorrichtung nach einem der Ansprüche 1 bis 27, dadurch gekennzeichnet, daß die Greifelementträger (5, 6, 30, 33) aus Polyurethan bestehen.

29. Gleitschutzvorrichtung nach einem der Ansprüche 1 bis 28, dadurch gekennzeichnet, daß die Greifelementträger (30) mit Verstärkungseinlagen (31) versehen sind.

30. Gleitschutzvorrichtung nach einem der Ansprüche 1 bis 29, dadurch gekennzeichnet, daß die Greifelementträger (5, 6, 30, 33) an ihrer der Lauffläche (1) des Fahrzeugrades (2) zugewandten Seite mit Mitnehmern (29) versehen sind.

31. Gleitschutzvorrichtung nach einem der Ansprüche 1 bis 30, dadurch gekennzeichnet, daß die Greifelemente (19) der Greifelementträger (5, 6, 30, 33) von stollenartigen Vorsprüngen gebildet werden.

32. Gleitschutzvorrichtung nach Anspruch 31, dadurch gekennzeichnet, daß die Greifelemente (19) und die Greifelementträger (5, 6, 30, 33) einstückig ausgebildet sind.

33. Gleitschutzvorrichtung nach einem der Ansprüche 1 bis 32, dadurch gekennzeichnet, daß die Kettenstrangabschnitte (3, 4) durch die Greifelementträger (5, 6, 30, 33) im Bereich der Schultern des auf das jeweilige Fahrzeugrad (2) montierten Reifens gehalten werden.

34. Gleitschutzvorrichtung nach einem der Ansprüche 1 bis 33, dadurch gekennzeichnet, daß die nebeneinander und im Abstand voneinander angeordneten Kettenstrangabschnitte (3, 4) parallel zueinander verlaufen.

## Claims

1. An antiskid device for vehicle wheels comprising a holder (12) - which is securable to the vehicle wheel (2) and is rotatable relatively thereto in the assembled or fitted state - for at least one retaining element (8), arranged on the outside of the wheel when the antiskid device is in the assembled or fitted state, the retaining element being for the retention of gripper element carriers (5) made of flexible rubber or plastics material and connected by chain length sections and provided with arms (11) projecting into the region of the tyre flank, the ends of the arms being mounted on the retaining element (8) so as to be pivotable around an axis extending parallel to the tyre flank, **characterised in that** the chain length sections (3,4) extend side by side and at an approximately constant spacing from one another on the tyre tread on both sides of the middle thereof in the peripheral direction of the tyre, that both ends of each chain length section (3,4) are connected to gripper element carriers (5), and that the gripper element carriers (5) constitute spacer members which secure the chain length section (3,4) relative to one another and co-operate with the chain length section (3,4) to form continuous tracking rings.

2. An antiskid device according to claim 1, **characterised in that** additional gripper element carriers (6,30,32) made of a flexible material, especially rubber or plastics material, without arms, and constructed as spacers for the chain length sections (3,4) are disposed between each pair of successive gripper element carriers (5) in the peripheral direction of the wheel and with arms (11) projecting into the region of the tyre flank.

3. An antiskid device according to Claim 1 or 2, characterised in that the protruding arms (11) are provided with attachment forks for a plurality of retaining arms (8) which form retaining elements.

4. An antiskid device according to Claim 3, characterised in that the tines (24, 25) of the attachment forks are connected with one another at their ends remote from the gripper elements (19) of the gripper element carriers (5) by support bridges (26) which form stops which limit the pivotability of the gripper element carriers (5) in relation to the retaining arms (8) and come to abut against the outside of the retaining arms (8).

5. An antiskid device according to any one of Claims 1 to 4, characterised in that the protruding arms (11) and the gripper element carriers (5) are made in one piece.

6. An antiskid device according to any one of Claims 1 to 5, characterised in that the gripper element carriers (5, 6, 30, 33) are provided with attachment elements (20) for links (21) of the chain length sections (3, 4).

7. An antiskid device according to Claim 6, characterised in that the attachment elements (20) of a gripper element carrier for each two chain length sections (3, 4) succeeding one another in the circumferential direction of the wheel are connected with one another through coupling elements (32).

8. An antiskid device according to Claim 6 or 7, characterised in that the attachment elements (20) are formed by hooks anchored in shape-engaging manner in the gripper element carriers (5, 6, 30, 33), on which hooks links (21) of the chain length sections (3, 4) can be hung.

9. An antiskid device according to Claim 8, characterised in that at least one part of the gripper element carriers (5, 6, 30, 33) is formed by elastic locking noses (22) for the links (21) of the chain length sections (3, 4), which links are hung on the hooks.

10. An antiskid device according to Claim 8 or 9, characterised in that the links (21) of the chain length sections (3, 4) which are connected with the attachment elements (20) are oriented parallel to the tread surface (1) of the vehicle wheel (2).

11. An antiskid device according to any one of Claims 8 to 10, characterised in that the links (21) of the chain length sections (3, 4) hung on the hooks form horizontal links (21) whose longitudinal legs are secured by blocking noses (28) against upward and transverse pivoting.

12. An antiskid device according to any one of Claims 6 to 11, characterised in that at least some of the links (21) of the chain length sections (3, 4) which are connected with the attachment elements (20) are secured in the hung-in position by a screw (23) each.

13. An antiskid device according to Claim 12, characterised in that the screw (23) is a multi-start screw.

14. An antiskid device according to Claim 12 or 13, characterised in that the screw (23) has a coarse thread.

15. An antiskid device according to any one of Claims 1 to 5, characterised in that at least some chain length sections (3, 4) are formed by sections of continuous chain lengths (36, 37) which are held in sockets (34) of the gripper element carriers (33).

16. An antiskid element according to any one of Claims 1 to 15, characterised in that the gripper element carriers (5, 6, 30, 33) are fitted with spikes (7).

17. An antiskid device according to Claim 16, characterised in that in each case at least two spikes (7) are arranged in the region of each corner of a gripper element carrier (5, 6, 30, 33).

18. An antiskid device according to Claim 15 or 17, characterised in that the spacing of each two spikes (7) succeeding one another in the running direction of a gripper element carrier (5, 6, 30, 33) is greater on the outside of the carrier than on the inside or vice versa.

19. An antiskid device according to any one of Claims 16 to 18, characterised in that the spikes (7) of a gripper element carrier (5, 6, 30, 33) are offset transversely of one another, considered in the wheel circumferential direction.

20. An antiskid device according to any one of Claims 1 to 19, characterised in that the outer width (bₐ), of the links of the chain length sections (3, 4) is substantially equal to the height (h) of the gripper element carriers (5, 6, 30, 33) in the region of the gripper elements (19).

21. An antiskid device according to any one of Claims 1 to 20, characterised in that the gripper element carriers (5, 6, 30, 33) consist of two longitudinal pieces (15, 16), arranged in the wheel circumferential direction and forming at least the greatest part of the gripper elements (19), and a distance member (17) connecting these with one another.

22. An antiskid device according to Claim 21, characterised in that the longitudinal pieces (15, 16) comprise constrictions (18).

23. An antiskid device according to Claim 21 or 22, characterised in that the longitudinal pieces (15, 16) and the distance pieces (17) are made in one piece

24. An antiskid device according to any one of Claims 21 to 23, characterised in that the distance pieces (17) are made X-shaped.

25. An antiskid device according to any one of Claims 21 to 24, characterised in that the longitudinal pieces (15, 16) are arranged substantially in alignment with the chain length sections (3, 4).

26. An antiskid device according to any one of Claims 1 to 25, characterised in that the chain length sections (3, 4) and the gripper element carriers (5, 6, 30, 33) form a closed ring of variable circumference.

27. An antiskid device according to any one of Claims 1 to 26, characterised in that the chain length sections (3, 4) which interconnect the gripper element carriers (5, 6, 30, 33) consist of at least three and at most seven chain links.

28. An antiskid device according to any one of Claims 1 to 27, characterised in that the gripper element carriers (5, 6, 30, 33) are made of polyurethane.

29. An antiskid device according to any one of Claims 1 to 28, characterised in that the gripper element carriers (30) are provided with reinforcing inlays (31).

30. An antiskid device according to any one of Claims 1 to 29, characterised in that the gripper element carriers (5, 6, 30, 33) are provided with engaging pieces (29) on their side facing the tread surface (1) of the vehicle wheel (2).

31. An antiskid device according to any one of Claims 1 to 30, characterised in that the gripper elements (19) of the gripper element carriers (5, 6, 30, 33) are formed by stud-like projections.

32. An antiskid device according to Claim 31, characterised in that the gripper elements (19) and the gripper element carriers (5, 6, 30, 33) are made in one piece.

33. An antiskid device according to any one of Claims 1 to 32, characterised in that the chain length sections (3, 4) are held by the gripper element carriers (5, 6, 30, 33) in the region of the shoulders of the tyre mounted on the respective vehicle wheel (2).

34. An antiskid device according to any one of Claims 1 to 33, characterised in that the chain length sections (3, 4) arranged side by side and with spacing from one another extend parallel with one another.

## Revendications

1. Dispositif antidérapant pour des roues de véhicules, comprenant un système d'attache (12), fixé sur la roue (2) et rotatif par rapport à cette dernière à l'état monté, pour au moins un élément d'attache (8) qui, à l'état monté du dispositif antidérapant, est disposé sur le côté extérieur de la roue, destiné à des supports d'éléments d'adhérence (5) réalisés en caoutchouc ou en matière plastique flexible qui sont reliés entre eux par des tronçons de chaîne et sont munis de bras (11) qui dépassent dans la région des flancs du pneumatique et dont les extrémités sont montées de manière articulée autour d'un axe parallèle au flanc du pneumatique sur l'élément d'attache (8), caractérisé en ce que les tronçons de chaîne (3, 4) s'étendent des deux côtés du milieu de la bande de roulement sur la bande de roulement de la roue, dans le sens circonférentiel de la roue, l'un a côté de l'autre et au moins à peu près à une distance constante l'un de l'autre, en ce que chacune des extrémités de chacun des tronçons de chaîne (3, 4) est reliée a un support d'élément d'adhérence (5), et en ce que les supports d'éléments d'adhérence (5) forment des entretoises assurant la position transversale des tronçons de chaîne (3, 4) l'un par rapport à l'autre, et forment ensemble avec les tronçons de chaîne (3, 4) des anneaux d'ornière continus.

2. Dispositif antidérapant selon la revendication 1, caractérisé en ce qu'entre des supports d'éléments d'adhérence (5) comprenant des bras (11) qui dépassent dans la région des flancs du pneumatique, se succèdant dans le sens circonférentiel de la roue, sont agencés des supports d'éléments d'adhérence (6, 30, 33) supplémentaires réalisés en un matériau flexible, notamment du caoutchouc ou une matière plastique, formant des entretoises pour les tronçons de chaîne (3, 4), qui ne présentent pas de bras.

3. Dispositif antidérapant selon l'une des revendications 1 ou 2, caractérisé en ce que les bras (11) sont munis de chapes de raccordement pour plusieurs bras d'attache (8) qui forment des éléments d'attache.

4. Dispositif antidérapant selon la revendication 3, caractérisé en ce que les branches (24, 25) des chapes de raccordement sont mutuellement reliées, à leurs extrémités opposées aux éléments d'adhérence (19) des supports d'éléments d'adhérence (5), par des ponts de soutien (26) qui constituent des butées limitant la possibilité de pivotement des supports d'éléments d'adhérence (5) par rapport aux bras d'attache (8) et venant s'appliquer sur le côté extérieur des bras d'attache (8).

5. Dispositif antidérapant selon l'une des revendications 1 à 4 caractérisé en ce que les bras (11) et les supports d'éléments d'adhérence (5) sont réalisés en une pièce.

6. Dispositif antidérapant selon l'une des revendications 1 à 5 caractérisé en ce que les supports d'éléments d'adhérence (5, 6, 30, 33) sont munis d'organes de raccordement (20) pour des maillons (21) des tronçons de chaînes (3, 4).

7. Dispositif antidérapant selon la revendication 6, caractérisé en ce que les organes de raccordement (20) d'un support d'éléments d'adhérence qui sont destinés a deux tronçons de chaînes (3, 4) qui se succèdent dans le sens circonférentiel de la roue, sont mutuellement reliés par l'intermédiaire d'éléments d'accouplement (32).

8. Dispositif antidérapant selon la revendication 6 ou 7, caractérisé en ce que les organes de raccordement (20) sont constitués par des crochets qui sont ancrés par épousement de formes dans les supports d'éléments d'adhérence (5, 6, 30, 33) et dans lesquels peuvent être accrochés des maillons (21) des tronçons de chaînes (3, 4).

9. Dispositif antidérapant selon la revendication 8, caractérisé en ce qu'au moins une partie des supports d'éléments d'adhérence (5, 6, 30, 33) forment des ergots de blocage élastiques (22) pour les maillons (21) des tronçons de chaînes (3, 4) qui sont accrochés dans les crochets.

10. Dispositif antidérapant selon la revendication 8 ou 9, caractérisé en ce que les maillons (21) des tronçons de chaînes (3, 4) qui sont reliés aux organes de raccordement (20), sont orientés parallèlement a la bande de roulement (1) de la roue de véhicule (2).

11. Dispositif antidérapant selon l'une des revendications 8 à 9, caractérisé en ce que les maillons (21) des tronçons de chaînes (3, 4) qui sont accrochés dans les crochets, constituent des maillons horizontaux (21) dont les branches longitudinales sont empêchées de pivoter vers le haut et transversalement par des ergots d'arrêt (28).

12. Dispositif antidérapant selon l'une des revendications 6 à 11, caractérisé en ce qu'au moins certains des maillons (21) des tronçons de chaînes (3, 4) qui sont reliés aux organes de raccordement (20), sont assujettis en position accrochée par des vis respectives (23).

13. Dispositif antidérapant selon la revendication 12, caractérisé en ce que la vis (23) est à plusieurs filets.

14. Dispositif antidérapant selon la revendication 12 ou 13, caractérisé en ce que la vis (23) possède un pas rapide.

15. Dispositif antidérapant selon l'une des revendications 1 à 5, caractérisé en ce qu'au moins certains des tronçons de chaînes (3, 4) sont constitués par des tronçons de chaînes continues (36, 37) qui sont maintenus dans des logements (34) des supports d'éléments d'adhérence (33).

16. Dispositif antidérapant selon l'une des revendications 1 à 15, caractérisé en ce que les supports d'éléments d'adhérence (5, 6, 30, 33) sont équipés de crampons (7).

17. Dispositif antidérapant selon la revendication 16, caractérisé en ce qu'au moins deux crampons respectifs (7) sont disposés dans chaque coin d'un support d'éléments d'adhérence (5, 6, 30, 33).

18. Dispositif antidérapant selon la revendication 16 ou 17, caractérisé en ce que la distance entre deux crampons (7) d'un support d'éléments d'adhérence (5, 6, 30, 33) qui se succèdent dans le sens de roulement est chaque fois plus petite sur le côté extérieur du support que sur le côté intérieur, ou vice-versa.

19. Dispositif antidérapant selon l'une des revendications 16 à 18, caractérisé en ce que les crampons (7) d'un support d'éléments d'adhérence (5, 6, 30, 33) sont, vus dans le sens circonférentiel de la roue, transversalement décalés les uns par rapport aux autres.

20. Dispositif antidérapant selon l'une des revendications 1 à 19, caractérisé en ce que la largeur extérieure (bₐ) des maillons des tronçons de chaînes (3, 4) est sensiblement égale à la hauteur (h) des supports d'éléments d'adhérence (5, 6, 30, 33) dans la région des éléments d'adhérence (19).

21. Dispositif antidérapant selon l'une des revendications 1 à 20, caractérisé en ce que les supports d'éléments d'adhérence (5, 6, 30, 33) sont constitués de deux parties longitudinales (15, 16), qui sont disposées dans le sens circonférentiel de la roue et qui constituent au moins la majeure partie des éléments d'adhérence (19), et d'un écarteur (17) qui relie ces parties longitudinales.

22. Dispositif antidérapant selon la revendication 21, caractérisé en ce que les parties longitudinales (15, 16) présentent des rétrécissements (18).

23. Dispositif antidérapant selon la revendication 21 ou 22, caractérisé en ce que les parties longitudinales (15, 16) et les écarteurs (17) sont réalisés en une pièce.

24. Dispositif antidérapant selon l'une des revendications 21 à 23, caractérisé en ce que les écarteurs (17) sont réalisés en forme de X.

25. Dispositif antidérapant selon l'une des revendications 21 à 24, caractérisé en ce que les parties longitudinales (15, 16) sont disposées sensiblement en alignement avec les tronçons de chaînes (3, 4).

26. Dispositif antidérapant selon l'une des revendications 1 à 25, caractérisé en ce que les tronçons de chaînes (3, 4) et les supports d'éléments d'adhérence (5, 6, 30, 33) constituent un anneau fermé de circonférence modifiable.

27. Dispositif antidérapant selon l'une des revendications 1 à 26, caractérisé en ce que les tronçons de chaînes (3, 4) qui relient entre eux les supports d'éléments d'adhérence (5, 6, 30, 33) sont constitués d'au moins trois et au plus sept maillons de chaînes.

28. Dispositif antidérapant selon l'une des revendications 1 à 27, caractérisé en ce que les supports d'éléments d'adhérence (5, 6, 30, 33) sont réalisés en polyuréthane.

29. Dispositif antidérapant selon l'une des revendications 1 à 28, caractérisé en ce que les supports d'éléments d'adhérence (30) sont munis de garnitures internes de renforcement (31).

30. Dispositif antidérapant selon l'une des revendications 1 à 29, caractérisé en ce que les supports d'éléments d'adhérence (5, 6, 30, 33) sont munis d'entraîneurs (29) sur leur côté tourné vers la bande de roulement (1) de la roue de véhicule (2).

31. Dispositif antidérapant selon l'une des revendications 1 à 30, caractérisé en ce que les éléments d'adhérence (19) des supports d'éléments d'adhérence (5, 6, 30, 33) sont constitués par des saillies du genre côtes.

32. Dispositif antidérapant selon la revendication 31, caractérisé en ce que les éléments d'adhérence (19) et les supports d'éléments d'adhérence (5, 6, 30, 33) sont réalisés en une pièce.

33. Dispositif antidérapant selon l'une des revendications 1 à 32, caractérisé en ce que les tronçons de chaînes (3, 4) sont maintenus par les supports d'éléments d'adhérence (5, 6, 30, 33) dans la région des épaulements du pneumatique monté sur la roue de véhicule respective (2).

34. Dispositif antidérapant selon l'une des revendications 1 à 33, caractérisé en ce que les tronçons de chaînes (3, 4), disposés à distance et côte-à-côte, s'étendent parallèlement entre eux.
